# EUROPEAN PATENT APPLICATION

(11) **EP 4 664 663 A1**
(43) Date of publication of application: **17.12.2025**
(21) Application number: 25157091.7
(22) Date of filing: 11.02.2025
(51) Int. Cl.: H01M 50/536, H01M 10/04, H01M 10/0587, H01M 50/538

(54) **SOLDERING STRUCTURE AND SOLDERING METHOD FOR BATTERY CELL, AND BATTERY**

(30) Priority: 13.06.2024 CN 202410766246; 13.06.2024 CN 202421355114 U; 14.08.2024 WO PCT/CN2024/112000
(71) Applicant: HUIZHOU EVE POWER CO., LTD, Huizhou, Guangdong 516039 (CN); Eve Power Co., Ltd., Jingmen, Hubei 448000 (CN)
(72) Inventor: LIN, Zhibing, Huizhou, Guangdong, 516039 (CN); SHU, Kuanjin, Huizhou, Guangdong, 516039 (CN); DUAN, Dong, Huizhou, Guangdong, 516039 (CN); LIU, Ziwen, Huizhou, Guangdong, 516039 (CN); HE, Wei, Huizhou, Guangdong, 516039 (CN)
(74) Representative: Berggren Oy

(57) **Abstract**

A soldering structure and a soldering method for a battery cell, and a battery are provided, relating to the field of battery technology. The soldering structure for the battery cell includes a wound body; full electrode tabs, formed at ends of the wound body; and current collecting parts, soldered to sides, facing away from the wound body, of the full electrode tabs to form multiple solder joints; in which the multiple solder joints are arranged at equal arc distances along a winding direction of the wound body. The multiple solder joints are arranged at equal arc distances along the winding direction of the wound body, so that the solder joints can be uniformly distributed on the full electrode tabs along the winding direction, and a current can be uniformly transmitted into the wound body through the full electrode tabs, reducing the current loss.

## Description

### TECHNICAL FIELD

The present application relates to the field of battery technology, and in particular to a soldering structure and a soldering method for a battery cell, and a battery.

### BACKGROUND

In a cylindrical battery, electrode tabs are soldered to electrode sheets and a current is transmitted to the electrode sheets through solder joints. The electrode tabs are usually soldered to the electrode sheets through laser soldering of full electrode tabs, which would form multiple solder joints, and a graphic composed of the multiple solder joints are in a shape of letter "V" or Chinese character " 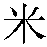 ".

### SUMMARY

A distribution of solder joints in a shape of letter "V" or Chinese character " 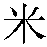 " would cause a large current to be received in some areas on the electrode sheets, while a small current to be received in other areas, resulting in the current uniformly flowing into the electrode sheets.

In a first aspect, the present application provides a soldering structure for a battery cell, and the soldering structure for the battery cell includes:
a wound body;
full electrode tabs, formed at ends of the wound body; and
current collecting parts, soldered to sides, facing away from the wound body, of the full electrode tabs to form multiple solder joints;
in which the multiple solder joints are arranged at equal arc distances along a winding direction of the wound body.

In a second aspect, the present application provides a soldering method for a battery cell, which is applied to the soldering structure for the battery cell as described in the first aspect, and the soldering method for the battery cell includes:
obtaining winding parameters of the wound body and soldering parameters of the full electrode tabs;
based on the winding parameters and the soldering parameters, simulating and outputting a winding shape of the wound body and a soldering trajectory of the full electrode tabs;
based on the winding shape, winding electrode sheets to form the wound body and flattening the full electrode tabs on end faces of the wound body; and
based on the soldering trajectory, determining positions for soldering between the full electrode tabs and the current collecting parts to form multiple solder joints.

In a third aspect, the present application provides a battery including the soldering structure for the battery cell as described in the first aspect, or the soldering structure for the battery cell obtained by the soldering method for the battery cell as described in the second aspect.

In the present application, the full electrode tabs are soldered to the current collecting parts through multiple solder joints, and the multiple solder joints are arranged at equal arc distances in a winding direction, so that the solder joints can be uniformly distributed on the full electrode tabs along the winding direction. When a current is transmitted into the wound body through the full electrode tabs from the current collecting parts, the current can be uniformly transmitted into the electrode sheets through the solder joints approximately uniformly distributed to improve uniformity of the current received by the electrode sheets. In detail, firstly, with electric connection between the full electrode tabs and the wound body, the wound body can be electrically connected to external parts through the full electrode tabs to realize current transmission. Secondly, by means of soldering, the full electrode tabs are connected to the current collecting parts. At positions for soldering, multiple solder joints are formed on the full electrode tabs, and the multiple solder joints are arranged at equal arc distances along the winding direction of the wound body, so that the multiple solder joints are uniformly distributed in the winding direction. When a current is transmitted into the full electrode tabs from the current collecting parts, the current is transmitted through multiple solder joints. Since all the solder joints are approximately uniformly distributed, the current transmitted from the solder joints to the wound body is more uniform than the current transmitted into the wound body irregularly. Since positions for transmitting the current are uniformly distributed, after the current flows into the wound body, the number of additional paths for transmitting the current in the wound body for uniform distribution can be effectively reduced, and energy loss caused by nonuniform current flowing into the wound body can be decreased.

### BRIEF DESCRIPTION OF THE DRAWINGS

FIG. 1 is a schematic diagram of a positional distribution of solder joints after a first type of electrode sheets are wound provided in the present application;
FIG. 2 is a schematic diagram of a positional distribution of solder joints after a second type of electrode sheets are wound provided in the present application;
FIG. 3 is a schematic diagram of a positional distribution of solder joints after a third type of electrode sheets are wound provided in the present application; and
FIG. 4 is a schematic diagram of an unwound structure of a soldering structure for a battery cell with current collecting parts hidden provided in the present application.

### Reference numerals in the drawings:

100: wound body; 110: electrode sheet; 200: full electrode tab; 210: solder joint group; 211: solder j oint; X: length direction; Y: width direction; Q: winding direction.

### DETAILED DESCRIPTION

In the following, the solutions in the embodiments of the present application are clearly and completely described with reference to the accompanying drawings. It should be noted that the described embodiments are merely a part of the embodiments of the present application, rather than all the embodiments. Based on the embodiments in the present application, all other embodiments obtained by a person skilled in the art without involving any inventive effort are within the scope of the present application.

In the present application, the term "example" is used to mean "as an example, illustration or explanation". In order to enable any technical personnel in this field to realize and use the present application, the following description is given. In the following description, details are listed for the purpose of explanation.

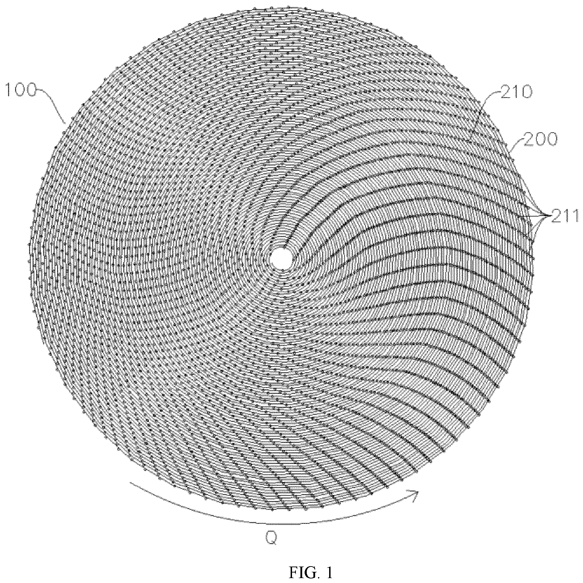

Referring to FIG. 1 to FIG. 4, embodiments of the present application provide a soldering structure for a battery cell including:
a wound body 100;
full electrode tabs 200, formed at ends of the wound body 100 and electrically connected to the wound body 100; and
current collecting parts, soldered to sides, facing away from the wound body 100, of the full electrode tabs 200 to form multiple solder joints 211;
in which the multiple solder joints 211 are arranged at equal arc distances along a winding direction Q of the wound body 100.

It should be noted that the wound body 100 includes electrode sheets 110 arranged in a winding manner, and diaphragms arranged between the electrode sheets 110 and attached to the electrode sheets 110. The full electrode tabs 200 are electrically connected to the electrode sheets 110 and located at ends of the wound body 100. The electrode sheets 110 each are in a form of a sheet before winding, with a length direction X and a width direction Y. Only when the electrode sheets 110 are wound, a winding direction Q of winding is provided in the electrode sheets 110. Thus, the electrode sheets 110 are formed into the wound body 100. In the subsequent description of the electrode sheets 110, when it is not specified that each of the electrode sheets 110 is in a form of a sheet or before winding, it refers to that the wound electrode sheets 110 are formed into the wound body 100. It should be noted that the wound body 100 should be further formed by diaphragms. The diaphragms are wound along with winding of the electrode sheets 110. However, since the concepts of the present application are related to the electrode tabs, the electrode sheets 110, and the solder joints 211, and the diaphragms belongs to the existing technology in batteries, it will not be repeated here. In the following, the formation of the wound body 100 will be described by winding of the electrode sheets 110.

The technical solution provided in the present application involves arranging the multiple solder joints 211 for soldering the full electrode tabs 200 to the current collecting parts at equal arc distances in a winding direction Q, so that the solder joints 211 can be uniformly distributed on the full electrode tabs 200 along the winding direction Q. When a current is transmitted into the wound body 100 through the full electrode tabs 200 from the current collecting parts, the current can be uniformly transmitted into the electrode sheets 110 through the solder joints 211 approximately uniformly distributed to improve uniformity of the current received by the electrode sheets 110. In detail, firstly, with electric connection between the full electrode tabs 200 and the wound body 100, the wound body 100 can be electrically connected to external parts through the full electrode tabs 200 to realize current transmission. Secondly, by means of soldering, the full electrode tabs 200 are connected to the current collecting parts. At positions for soldering, multiple solder joints 211 are formed on the full electrode tabs 200, and the multiple solder joints 211 are arranged at equal arc distances along the winding direction Q of the wound body 100, so that the multiple solder joints 211 are uniformly distributed in the winding direction Q. When a current is transmitted into the full electrode tabs 200 from the current collecting parts, the current is transmitted through multiple solder joints 211. Since the solder joints 211 are approximately uniformly distributed, the current transmitted from the solder joints 211 to the wound body 100 is more uniform than the current transmitted into the wound body 100 irregularly. Since positions for transmitting the current are uniformly distributed, after the current flows into the wound body 100, the number of additional paths for transmitting the current in the wound body 100 for uniform distribution can be effectively reduced, and the energy loss caused by the current nonuniformly flowing into the wound body 100 can be decreased.

In some embodiments, along the winding direction Q, multiple solder joints 211 equal are arranged at equal arc distances. By arranging all the solder joints 211 on the full electrode tab 200 at equal arc distances along the winding direction Q, as the electrode sheets 110 are wound, each of the solder joints 211 on the full electrode tabs 200 would form a spiral trajectory along the winding direction Q. The number of spiral trajectory and the number of spiral turns will vary with an arc length between adjacent solder joints 211, the number of winding turns of the electrode sheets 110, and an inner diameter and an outer diameter formed by the winding. Multiple solder joints 211 are of equal arc lengths and form a spiral trajectory, so that the multiple solder joints 211 can be uniformly distributed on a winding path of the electrode sheets 110, therefore when a current transmitted from the full electrode tabs 200 is received by the electrode sheets 110, the current can be transmitted in the electrode sheets 110 through the uniformly distributed solder joints 211, which improves uniformity of the current received by the electrode sheets 110 and reduces the loss of the current inside the electrode sheets 110.

It should be noted that for the arrangement of the multiple solder joints 211 at equal arc distances, in this embodiment, a simulation software, such as AutoCAD, is used to simulate the trajectory of the solder joints based on the input parameters. After simulation results of the trajectory of the solder joints are obtained, the simulation results are input to an actuator, and the actuator performs soldering based on the simulated trajectory of the solder joints. In case that the soldered wound body 100 and the full electrode tabs 200 connected to the wound body 100 are unwound to make the wound body 100 return to the electrode sheets 110 in a shape of a sheet and the full electrode tabs 200, the full electrode tabs 200 are located at ends of the electrode sheets 110 along the width direction Y, and multiple traces of the solder joints 211 arranged at equal intervals along the length direction X are formed on the full electrode tabs 200.

In some embodiments, multiple solder joints 211 arranged at intervals along a radial direction form multiple solder joint groups 210, and the multiple solder joint groups 210 are spirally arranged along the winding direction Q of the wound body 100 and form at least one spiral trajectory. The spiral trajectory here does not refer to the spiral trajectory formed by the winding of the electrode sheets 110, but the spiral trajectory formed by the multiple solder joint groups 210. Specifically, each solder joint group 210 is regarded as a point, and multiple solder joint groups 210 are connected along the winding direction Q to form a spiral trajectory. By forming a spiral trajectory along the winding direction Q with the multiple solder joint groups 210, when the current is transmitted into the electrode sheets 110 through the full electrode tabs 200, a solder joint 211 can be formed at each position of the electrode sheets 110 along the winding direction Q for receiving the current, so as to ensure that the current uniformly flows into the electrode sheets 110 through the full electrode tabs 200.

Further, a radial direction of the wound body 100 is provided. The solder joints 211 in each solder joint group 210 are arranged at intervals along the radial direction and arranged in a shape of an arc to make the solder joint group 210 in a shape of an arc. With an increase in the number of turns of the electrode sheets 110, the outer diameter of the wound body 100 gradually increases, and along the winding direction Q, an arc distance between two adjacent solder joints 211 remains unchanged. It can be deduced that the number of solder joints 211 on the full electrode tabs 200 corresponding to a next turn of the winding of the electrode sheets 110 is greater than the number of solder joints 211 on the full electrode tabs 200 corresponding to a previous turn of the winding of the electrode sheets 110. Therefore, along the radial direction, a connecting line of the multiple solder joints 211 is in a shape of an arc, that is, the solder joint group 210 is in a shape of an arc. Thus, the arrangement of the multiple solder joints 211 on the electrode sheets 110 follow a certain pattern. The multiple solder joints 211 are specifically distributed on each turn of the winding of the electrode sheets 110, rather than randomly arranged, which is beneficial for the electrode sheets 110 to receive the uniform current transmitted through the full electrode tabs 200, reducing the path movement of the current in the electrode sheets 110 to make the current inside the electrode sheets 110 uniform, and reducing the loss of the current.

In some embodiments, an inner diameter, an outer diameter, and a number of winding turns of the wound body 100 are provided. In case that a difference between the outer diameter and the inner diameter is constant, the number of turns of the spiral trajectory and the number of the spiral trajectories are positively correlated with the number of winding turns. In case that the number of winding turns is constant, the number of turns of the spiral trajectory and the number of the spiral trajectories are inversely correlated with the difference between the outer diameter and the inner diameter. It should be noted that the inner diameter refers to a diameter of a circle formed along the winding path of a first turn when the electrode sheets 110 are wound to the first turn, and the outer diameter refers to a diameter of a circle formed along the winding path of a last turn when the electrode sheets 110 are wound to the last turn. That is, the larger the difference between the outer diameter and the inner diameter, the few the number of the turns of the spiral trajectory. This is because when the difference between the outer diameter and the inner diameter is large, which indicates that the size of the wound body formed by winding of the current electrode sheets 110 is large, and a spiral length is long enough to arrange more solder joints 211, so that the arc length between the intervals does not need to be shortened due to the multiple solder joints 211. The number of turns of the spiral trajectory formed by the multiple solder joints 211 can meet an arrangement of all solder joints 211 even if the number is small. The smaller the difference between the outer diameter and the inner diameter, the larger the number of turns of the spiral trajectory. This is because when the difference between the outer diameter and the inner diameter is small, which indicates that the size of the wound body formed by winding of the current electrode sheets 110 is small, the spiral length of the electrode sheets 110 is short. When more solder joints 211 need to be arranged, the number of turns of the spiral trajectory should be increased, so that the multiple solder joints 211 can be uniformly arranged on the electrode sheets 110. The number of turns of the spiral trajectory is positively correlated with the number of winding turns. That is, the larger the number of winding turns of the electrode sheets 110, the larger the number of turns of the spiral trajectory. This is because the spiral trajectory is formed by multiple solder joint groups 210, and the multiple solder joint groups 210 is formed by the multiple solder joints 211. The larger the number of winding turns of the electrode sheets 110, the larger the number of the solder joints 211, and the larger of the number of turns of the spiral trajectory. The number of the spiral trajectories here refers to how many spiral trajectories there are. The spiral trajectories are formed by the multiple solder joint groups 210 arranged at intervals along the winding direction Q. The greater the difference between the outer diameter and the inner diameter, the fewer the number of the spiral trajectories, and the smaller the difference in diameter, the larger the number of the spiral trajectories. The larger the number of winding turns of the electrode sheets 110, the larger the number of the spiral trajectories, and the fewer the number of winding turns, the fewer the number of the spiral trajectories.

In some embodiments, the inner diameter is in a range of 4 mm to 7 mm, and/or the outer diameter is in a range of 10 mm to 70 mm, and/or the number of winding turns is in a range of 20 to 100, and/or the arc distance between two adjacent solder joints 211 along the winding direction Q of the wound body 100 is in a range of 2 mm to 20 mm. The number and structure of the spiral trajectories formed vary with the inner diameter, the outer diameter, and the number of winding turns. The following are examples of different values.

In a first example, referring to FIG. 1, when the inner diameter is 5 mm to 7 mm, the outer diameter is 55 mm to 65 mm, the number of winding turns is 80 to 100, and the arc distance between two adjacent solder joints 211 along the winding direction Q of the wound body 100 is 3 mm to 5 mm, the number of spiral trajectories is one, and multiple solder joint groups 210 in the spiral trajectory form one turn of spiral trajectory along the winding direction Q. In this embodiment, the inner diameter is 5 mm, the outer diameter is 60 mm, the number of winding turns is 90, and the arc distance between two adjacent solder joints along the winding direction of the wound body is 4 mm. In this embodiment, the multiple solder joints 211 can be uniformly distributed along the spiral direction at ends of the electrode sheets 110, so that when the current transmitted through the full electrode tabs 200 is received by the electrode sheets 110, the transmitted current is uniformly transmitted to each position on the electrode sheets 110 through the solder joints 211, reducing the number of the flow path of the current, and reducing the energy loss.

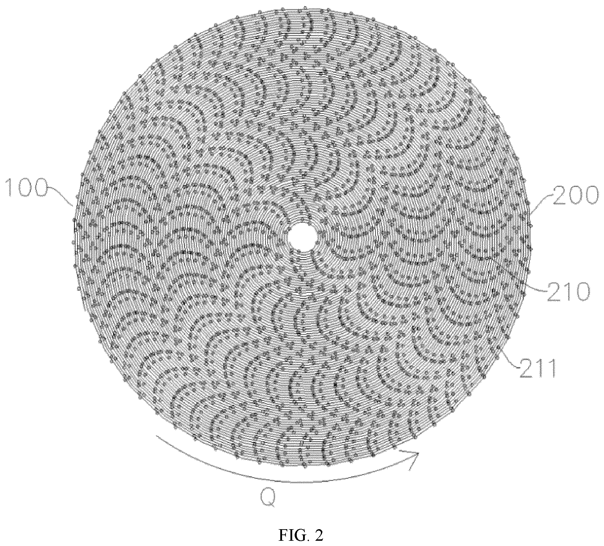

In a second example, referring to FIG. 2, when the inner diameter is 5 mm to 7 mm, the outer diameter is 35 mm to 45 mm, the number of winding turns is 80 to 100, and the arc distance between the two adjacent solder joints 211 along the winding direction Q of the wound body 100 is 3 mm to 5 mm, the number of spiral trajectories is two, and multiple solder joint groups 210 in each spiral trajectory form three turns of spiral trajectories along the winding direction Q. In this example, the inner diameter is 5 mm, the outer diameter is 40 mm, the number of winding turns is 90, and the arc distance between two adjacent solder joints along the winding direction of the wound body is 4 mm. Compared with the first example, in this example, only the outer diameter is reduced, the outer diameter is reduced from 60 mm to 40 mm, the number of the spiral trajectories is changed from one to two, and the number of turns of the spiral trajectory formed by the solder joint groups 210 along the winding direction Q is increased to three. It can be seen that as the difference between the outer diameter and the inner diameter decreases, the number of the spiral trajectories increases, and the number of turns of the spiral trajectory also increase.

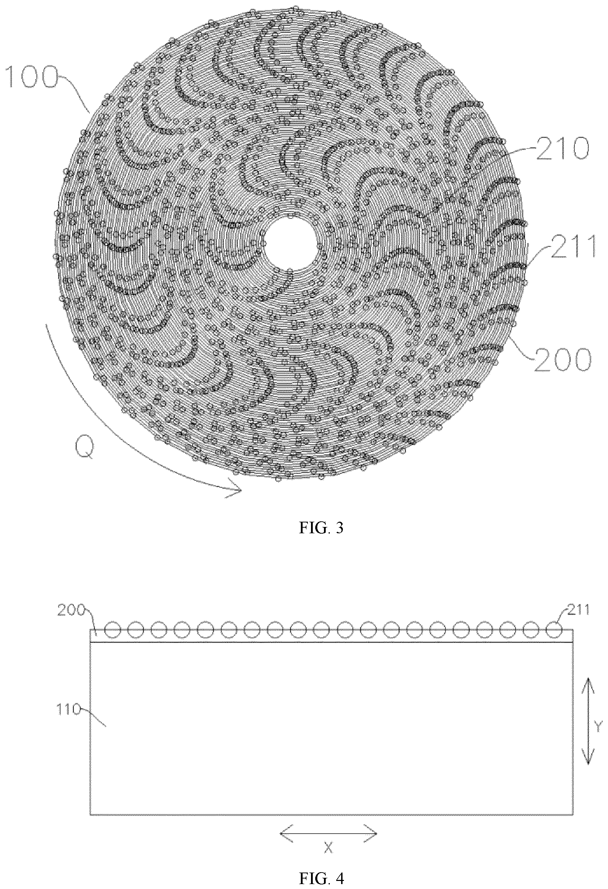

In a third example, referring to FIG. 3, when the inner diameter is 5 mm to 7 mm, the outer diameter is 17 mm to 27 mm, the number of winding turns is 80 to 100, and the arc distance between two adjacent solder joints 211 along the winding direction Q of the wound body 100 is 3 mm to 5 mm, the number of spiral trajectories is one, and multiple solder joint groups 210 in the spiral trajectory form two turns of spiral trajectories along the winding direction Q. In this example, the inner diameter is 5 mm, the outer diameter is 22 mm, the number of winding turns is 90, and the arc distance between two adjacent solder joints along the winding direction of the wound body is 4 mm. Compared with the first example, in this example, the outer diameter is reduced, and the outer diameter is reduced from 60 mm to 22 mm. In the spiral trajectory, the number of turns of the spiral trajectory formed by the solder joint groups 210 winding along the winding direction Q is increased to three.

It should be noted that the solder joints 211 described in any one of the embodiments described above is formed by spot soldering. By means of spot soldering, the distance between the solder joints 211 on the full electrode tabs 200 along the winding direction Q is equal, which is beneficial for uniformly transmitting the current into the electrode sheets 110 through the full electrode tabs 200. In addition, the solder joints 211 are formed by spot soldering, the size of the solder joints 211 can be changed according to the actual situation, so as to meet the requirements for the drawing force between the full electrode tabs 200 and the electrode sheets 110 under different conditions. For the shape of the solder joints 211, for example, the solder joints 211 can be set in a shape of a block, or a dot. according to the actual situation, such as the distance between adjacent winding turns, and the distance between adjacent solder joints 211 in the winding direction Q. In this embodiment, the dot is preferred, which facilitates the operation of spot soldering. For a diameter of the solder joints 211, it can be in a range of 0.5 mm to 3 mm.

It should be noted that in order to clearly show the positions of the solder joints 211 in the accompanying drawings, all the solder joints 211 in the accompanying drawings are represented in a form of hollow dots. The hollow dots are not the actual shape of the solder joints 211, and a structural shape of the solder joints 211 should not be limited to this.

The embodiments of the present application further provide a soldering method for a battery cell, which is applied to the soldering structure for the battery cell as described in any one of the above embodiments. The soldering method for the battery cell includes:
obtaining winding parameters of a wound body and soldering parameters of full electrode tabs; in which the winding parameters include an inner diameter, an outer diameter, and the number of winding turns, and the soldering parameters includes an arc distance between adjacent solder joints along a winding direction;
based on the winding parameters and the soldering parameters, simulating and outputting a winding shape of the wound body and soldering trajectories of the full electrode tabs;
based on the winding shape, winding electrode sheets to form the wound body and flattening the full electrode tabs on end faces of the wound body; and
based on the soldering trajectories, determining positions for soldering between the full electrode tabs and the current collecting parts to form multiple solder joints; in which the multiple solder joints are arranged at equal arc distances along the winding direction of the electrode sheets.

The method provided in this embodiment involves obtaining the winding parameters and soldering parameters, simulating the soldering trajectories based on the relevant parameters, and then soldering the wound body based on the simulated trajectories. The positions for soldering and the distance between multiple solder joints can be adjusted by setting the soldering parameters, so that the multiple solder joints are arranged at equal arc distances on the wound body along the winding direction, ensuring that the current can be uniformly transmitted into the wound body, reducing the invalid transmission path of the current, and reducing the energy loss. The winding parameters and soldering parameters can be selected according to the actual needs of users, so that a specific structure of the wound body formed can be adjusted according to the actual situation, and the positions of the multiple solder joints and soldering trajectories can also be adjusted according to the actual situation, so as to improve the applicability of the soldering method for the electrode sheets and a soldering structure formed for the electrode sheets.

The method embodiment described above involves obtaining all parameters, simulating the positions of the solder joints based on the parameters, and finally performing winding and soldering based on the simulation results to obtain the soldering structure for the battery cell. In other embodiments of the present application, the soldering structure for the battery cell can be obtained by another method, which specifically involves firstly, along the length direction of the electrode sheets, setting solder joint markings at equal intervals on the full electrode tabs; secondly, obtaining winding parameters of the electrode sheets, and then winding the electrode sheets and the full electrode tabs based on the winding parameters; thirdly, flattening the wound full electrode tabs; and fourthly, soldering the full electrode tabs to the current collecting parts by soldering equipment, with the positions with the solder joint markings as the positions for soldering. Through pre-setting of the solder joint markings at equal intervals, soldering is performed at positions of the solder joint markings after winding to form multiple solder joints at equal arc distances along the winding direction. Compared with the technical solution of the previous method embodiment, in this method, the determination of positions of the solder joints at equal arc distances is simpler, which can simplify the calculation process, and the accuracy of positions of the solder joints can be guaranteed.

This embodiment of the present application provides a battery including the soldering structure for the battery cell as described in any one of the above embodiments or the soldering structure for the battery cell prepared by the soldering method for the battery cell as described in any one of the above embodiments. It should be noted that since the battery includes the soldering structure for the battery cell as described in any one of the above embodiments, the battery can realize similar or identical beneficial effects as those of the soldering structure for the battery cell. The specific derivation process of the beneficial effects can be found in the embodiments of the soldering structure for the battery cell, which will not be repeated here.

In addition, the present application uses specific words to describe the embodiments of the present application. For example, "one embodiment", "an embodiment", and/or "some embodiments" refer to a feature, structure or characteristic related to at least one embodiment of the present application. Therefore, it should be emphasized and noted that the "an embodiment" or "one embodiment" or "an alternative embodiment" mentioned twice or more in different places in this specification does not necessarily refer to the equal embodiment. In addition, certain features, structures or characteristics of one or more embodiments of the present application may be appropriately combined.

In some embodiments, numbers describing the number of components and attributes are used. It should be understood that such numbers used to describe the embodiments are modified by the modifiers "about", "approximate" or "generally" in some examples. Unless otherwise stated, "about", "approximate" or "generally" indicates that the number allows for a ±% change. Accordingly, in some embodiments, the numerical parameters used in the specification and the claims are approximate values, which can be changed according to the characteristics required by individual embodiments. In some embodiments, the numerical parameters should consider the specified effective digits and adopt the method of general digit retention. Although in some embodiments of the present application, the numerical range and parameters used to confirm the range breadth are approximate values, in the specific embodiments, the setting of such values is as accurate as possible within the feasible range.

## Claims

1. A soldering structure for a battery cell, **characterized in that** the soldering structure for a battery cell comprises
a wound body (100);
full electrode tabs (200), formed at ends of the wound body (100); and
current collecting parts, soldered to sides, facing away from the wound body (100), of the full electrode tabs (200) to form a plurality of solder joints (211);
wherein the plurality of solder joints (211) are arranged at equal arc distances along a winding direction (Q) of the wound body (100).

2. The soldering structure for the battery cell of claim 1, wherein the solder joints (211) form a plurality of solder joint groups (210), and the solder joints (211) in each of the solder j oint groups (210) are arranged in a shape of an arc along a radial direction.

3. The soldering structure for the battery cell of claim 2, wherein the solder joint groups (210) are spirally arranged along the winding direction (Q) of the wound body (100) and form at least one spiral trajectory.

4. The soldering structure for the battery cell of claim 3, wherein an inner diameter, an outer diameter, and a number of winding turns of the wound body (100) are provided, and in case that a difference between the outer diameter and the inner diameter is constant, a number of turns of a spiral trajectory and a number of the spiral trajectories are positively correlated with the number of the winding turns.

5. The soldering structure for the battery cell of claim 4, wherein in case that the number of the winding turns is constant, the number of the turns of the spiral trajectory and the number of spiral trajectories are inversely correlated with the difference between the outer diameter and the inner diameter.

6. The soldering structure for the battery cell of claim 5, wherein the inner diameter is in a range of 4 mm to 7 mm.

7. The soldering structure for the battery cell of claim 5, wherein the outer diameter is in a range of 10 mm to 70 mm.

8. The soldering structure for the battery cell of claim 5, wherein the number of winding turns is in arrange of 20 to 100.

9. The soldering structure for the battery cell of claim 5, wherein an arc distance between two adjacent solder joints (211) along the winding direction (Q) of the wound body (100) is in a range of 2 mm to 20 mm.

10. The soldering structure for the battery cell of any one of claims 5 to 9, wherein the inner diameter is in a range of 4 mm to 7 mm, the outer diameter is in a range of 10 mm to 70 mm, the number of the winding turns is in a range of 20 to 100, and the arc distance between the two adjacent solder joints (211) along the winding direction (Q) of the wound body (100) is in a range of 2 mm to 20 mm.

11. The soldering structure for the battery cell of claim 10, wherein the inner diameter is 5 mm to 7 mm, the outer diameter is 55 mm to 65 mm, the number of the winding turns is 80 to 100, the arc distance between two adjacent solder joints (211) along the winding direction (Q) of the wound body (100) is 3 mm to 5 mm, and the number of turns of the spiral trajectory is one.

12. The soldering structure for the battery cell of claim 10, wherein the inner diameter is 5 mm to 7 mm, the outer diameter is 35 mm to 45 mm, the number of the winding turns is 80 to 100, the arc distance between the two adjacent solder joints (211) along the winding direction (Q) of the wound body (100) is 3 mm to 5 mm, the number of the spiral trajectories is two, and the number of turns of each of the spiral trajectories is three; or
the inner diameter is 5 mm to 7 mm, the outer diameter is 17 mm to 27 mm, the number of the winding turns is 80 to 100, the arc distance between the two adjacent solder joints (211) along the winding direction (Q) of the wound body (100) is 3 mm to 5 mm, the number of the spiral trajectories is one, and the number of turns of the spiral trajectory is two.

13. The soldering structure for the battery cell of any one of claims 1 to 12, wherein the solder joints (211) are in a shape of a dot, and a diameter of each of the solder joints (211) is in a range of 0.5 mm to 3 mm.

14. A soldering method for a battery cell, **characterized in that** the soldering method for the battery cell comprises the soldering structure for the battery cell of any one of claims 1 to 13, the soldering method for the battery cell comprising:
obtaining winding parameters of the wound body (100) and soldering parameters of the full electrode tabs (200);
based on the winding parameters and the soldering parameters, simulating and outputting a winding shape of the wound body (100) and a soldering trajectories of the full electrode tabs (200);
based on the winding shape, winding electrode sheets (110) to form the wound body (100) and flattening the full electrode tabs (200) on end surfaces of the wound body (100); and
based on the soldering trajectory, determining positions for soldering between the full electrode tabs (200) and the current collecting parts to form a plurality of solder joints (211);
wherein the plurality of solder j oints (211) are arranged at equal arc distances along the winding direction (Q) of the wound body (100).

15. A battery, **characterized in that** the battery is applied to the soldering structure for the battery cell of any one of claims 1 to 13, or comprising the soldering structure for the battery cell obtained through the soldering method for the battery cell of claim 14.
